# EUROPÄISCHE PATENTSCHRIFT

(11) **EP 3 109 388 B1**
(45) Veröffentlichungstag und Bekanntmachung des Hinweises auf die Patenterteilung: **04.09.2024**
(21) Anmeldenummer: 16001313.2
(22) Anmeldetag: 10.06.2016
(51) Int. Cl.: E05D 15/58, E05F 15/40, E05F 15/42, E05F 15/47

(54) **SCHWENKTÜRKONSTRUKTION FÜR EIN KRAFTFAHRZEUG, VORZUGSWEISE EINEN OMNIBUS**
PIVOTING DOOR STRUCTURE FOR A MOTOR VEHICLE, PREFERABLY A BUS
CONSTRUCTION DE PORTE PALIÈRE POUR UN VEHICULE AUTOMOBILE, DE PRÉFÉRENCE POUR UN OMNIBUS

(30) Priorität: 23.06.2015 DE 102015008062
(43) Veröffentlichungstag der Anmeldung: 28.12.2016
(73) Patentinhaber: MAN Truck & Bus SE, 80995 München (DE)
(72) Erfinder: Deufel, Thomas, 85254 Vierkirchen (DE); Schilling, Fabrice, 07546 Gera (DE); Schöller, Michael, 82166 Gräfelfing (DE)
(74) Vertreter: v. Bezold & Partner Patentanwälte - PartG mbB

(56) Entgegenhaltungen:
- EP-A1- 2 963 221
- DE-U1- 202014 007 556
- GB-A- 1 060 488

## Beschreibung

Die Erfindung betrifft eine Schwenktürkonstruktion für ein Kraftfahrzeug, vorzugsweise einen Omnibus. Die Schwenktürkonstruktion ist insbesondere als z. B. zweiflüglige Innenschwenktürkonstruktion ausgeführt.

Innenschwenktürkonstruktionen für Omnibusse umfassen in der Regel zwei verschwenkbare Türblätter und eine Führungsmechanik für die Türblätter. Derartige Innenschwenktürkonstruktionen sind üblicherweise mit sogenannten Druckwellenschaltern ausgestattet. Die Druckwellenschalter dienen dazu, zu erfassen, ob die Türblätter während eines Schließvorgangs auf ein Hindernis (z. B. ein- oder aussteigende Fahrgäste) treffen. Sofern ein Hindernis getroffen wird, kann der Schließvorgang der Türblätter gestoppt oder reversiert werden. In der Praxis sind die Druckwellenschalter üblicherweise türblattextern und insbesondere relativ zu den Omnibussen ortsfest angeordnet. Nachteilhaft daran ist insbesondere der erforderliche Platzbedarf und die Länge der Druckleitung, so dass Steuersignale verzögert verarbeitet und umgewandelt werden. DE 20 2014 007 556 U1 offenbart eine Türe für Personenbeförderungsfahrzeuge, insbesondere für Fahrzeuge des öffentlichen Personenverkehrs wie z. B. Omnibusse, insbesondere Schwenktüre, wie z. B. Innenschwenktüre, mit wenigstens einem, vorzugsweise zwei Türblättern, die in der Geschlossenstellung innerhalb eines Türportals mit aneinander anliegenden Innenkanten angeordnet sind und von denen jedes Türblatt über Schwenkarme mit einer im Wesentlichen vertikal im Fahrzeug angeordneten Drehsäule verbunden und an seiner Oberkante mittels wenigstens eines Rollenhalters über eine Rollenführung in einer oberhalb der Türblätter angeordneten Führungsschiene schwenkbar geführt ist, wobei beide Türblätter mittels einer Antriebsvorrichtung aus der Geschlossenstellung um etwa 90° in eine Öffnungsstellung und umgekehrt schwenkbar sind, wobei im oberseitigen Bereich des Türblattes wenigstens ein Druckwellenschalter angeordnet ist. EP 2 963 221 A1, wobei dieses Dokument unter Art. 54 (3) EPÜ fällt, offenbart eine Schwenktürkonstruktion für ein Kraftfahrzeug, vorzugsweise einen Omnibus. Die Schwenktürkonstruktion umfasst zumindest ein verschwenkbares Türblatt, zumindest eine Führungsmechanik für das Türblatt und zumindest einen Schalter, vorzugsweise einen Druckwellenschalter, zum Erfassen, ob das Türblatt während eines Schließvorgangs auf ein Hindernis trifft.

GB 1 060 488 A offenbart eine Schwenktürkonstruktion gemäß dem Oberbegriff des Anspruchs 1.

Eine Aufgabe der Erfindung ist es, eine verbesserte und/oder alternative Schwenktürkonstruktion für ein Kraftfahrzeug, vorzugsweise einen Omnibus, zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung entnommen werden.

Die Erfindung schafft eine Schwenktürkonstruktion für ein Kraftfahrzeug, vorzugsweise einen Omnibus, insbesondere einen Stadtbus. Die Schwenktürkonstruktion umfasst zumindest ein zum Öffnen und Schließen verschwenkbares Türblatt, zumindest eine Führungsmechanik für das Türblatt und zumindest einen Schalter (z. B. ein Erfassungselement) für das Türblatt, insbesondere einen Druckwellenschalter. Der Druckwellenschalter dient dazu, zu erfassen, ob das Türblatt während eines Schließvorgangs auf ein Hindernis (z. B. Fahrgast oder ein unerwünschter Gegenstand) trifft. Es ist möglich, dass die Schwenktürkonstruktion so ausgeführt ist, dass, wenn ein Hindernis mittels des Schalters erfasst wird, der Schließvorgang des Türblatts gestoppt und/oder reversiert wird.

Die Schwenktürkonstruktion zeichnet sich insbesondere dadurch aus, dass der Schalter z. B. an dem Türblatt festgelegt (z. B. montiert, angebracht, türblattfest etc.) ist und zweckmäßig gemeinsam mit dem Türblatt verschwenkbar ist.

Dadurch kann eine verbesserte, zweckmäßig torsionsarme Steuerkabelführung für den Schalter ermöglicht werden und zudem das Erfassen, ob das Türblatt während eines Schließvorgangs auf ein Hindernis trifft, verbessert werden, insbesondere wegen der ermöglichten verkürzten Steuerkabelführung.

Die Führungsmechanik umfasst vorzugsweise eine türblattseitige Führungsmechanik (z. B. eine Schienen-Kulissenstein-Konstruktion oder eine Schienen-Rollen-Konstruktion). Die Schwenktürkonstruktion zeichnet sich somit vorzugsweise dadurch aus, dass sie mit einer türblattseitigen Führungsmechanik versehen ist. Die türblattseitige Führungsmechanik kann einen integrierten Schalter aufweisen.

Der Schalter ist vorzugsweise lateral benachbart zu oder in der türblattseitigen Führungsmechanik angeordnet, insbesondere darin integriert. Bei einer besonders bevorzugten Ausführungsform ist der Schalter in eine türblattseitige Führungsschiene (z. B. Rollen- oder Kulissensteinführung) integriert.

Die türblattseitige Führungsmechanik erstreckt sich zweckmäßig entlang des oberen Endes des Türblatts.

Der Schalter ist vorzugsweise an einem oberen Eckbereich des Türblatts insbesondere türblattfest angebracht.

Die türblattseitige Führungsmechanik umfasst vorzugsweise eine z. B. im Wesentlichen U-förmige Führungsschiene. Der Schalter ist vorzugsweise lateral benachbart zu oder in der Führungsschiene angeordnet. Die Führungsschiene dient vorzugsweise zum Führen z. B. einer Rolle oder eines Kulissensteins.

Die Führungsmechanik umfasst darüber hinaus eine türrahmenseitige Führungsmechanik für das Türblatt.

Die türrahmenseitige Führungsmechanik umfasst eine Führungsschiene, die zum Führen einer Rolle oder eines Kulissensteins dient.

Es ist möglich, dass die türblattseitige Führungsmechanik und die türrahmenseitige Führungsmechanik über ein zweckmäßig verfahrbares Verbindungselement miteinander verbunden sind.

Es ist möglich, dass das Verbindungselement vorzugsweise unten den Schalter trägt und/oder zweckmäßig oben das geführte Führungselement (z. B. Rolle oder Kulissenstein) der türrahmenseitigen Führungsmechanik trägt. Ferner kann das Verbindungselement zweckmäßig unten das geführte Führungselement (z. B. Rolle oder Kulissenstein) der türblattseitigen Führungsmechanik tragen.

Der Schalter ist mit einem Steuerkabel verbunden. Das Steuerkabel dient zur Verbindung des Schalters mit einer Türsteuereinheit.

Das Steuerkabel verläuft durch eine Öffnung in der Führungsschiene und entlang der Führungsschiene der türrahmenseitigen Führungsmechanik.

Die türblattseitige Führungsmechanik umfasst vorzugsweise eine Führungsschiene und eine darin geführte Rolle oder einen darin geführten Kulissenstein, so dass die türblattseitige Führungsmechanik zweckmäßig als Schienen-Kulissenstein-Konstruktion oder Schienen-Rollen-Konstruktion bezeichnet werden kann. Das Verbindungselement kann z. B. als Rollen- oder Kulissensteinhalter bezeichnet werden.

Die türrahmenseitige Führungsmechanik umfasst eine Führungsschiene und einen darin geführten Kulissenstein oder eine darin geführte Rolle, so dass die türrahmenseitige Führungsmechanik zweckmäßig ebenfalls als Schienen-Kulissenstein-Konstruktion oder Schienen-Rollen-Konstruktion bezeichnet werden kann.

Der Schalter kann insbesondere außerhalb des Türblatts, insbesondere außerhalb der türblattseitigen Führungsschiene, angeordnet sein. Alternativ oder ergänzend kann der Schalter benachbart zum Türblatt, insbesondere benachbart zu der türblattseitigen Führungsschiene, angeordnet sein.

Der Schalter weist eine Membran auf. Die Membran ist im Wesentlichen horizontal ausgerichtet und/oder im Wesentlichen liegend verbaut, z. B. mit einer Abweichung von maximal +/- 10° oder +/-5°. Die Membran wird betriebsgemäß insbesondere im Wesentlichen vertikal bzw. in Höhenrichtung beansprucht.

Die Schwenktürkonstruktion umfasst, wie z. B. oben erwähnt, ein verfahrbares Verbindungselement zur Verbindung einer türblattseitigen Führungsmechanik und einer türrahmenseitigen Führungsmechanik für das Türblatt.

In einer bevorzugten Ausführungsform der Erfindung trägt das Verbindungselement den Schalter. Insbesondere kann der Schalter z. B. in das Verbindungselement integriert sein.

Das Verbindungselement ist vorzugsweise mehrteilig ausgeführt, insbesondere aus mehreren, z. B. zumindest drei Einzelteilen. Die Einzelteile des Verbindungselements sind zweckmäßig mittels Befestigungsmitteln, z. B. einer Verschraubung, Vernietung etc., aneinander montiert. Alternativ oder ergänzend ist das Verbindungselement nicht als Eisen- oder Metall-Gussteil ausgeführt.

Es ist möglich, dass das Verbindungselement eine Tragstruktur umfasst zum Tragen des Schalters und/oder zum Tragen eines Halteteils zum Halten eines geführten Führungselements (z. B. Rolle oder Kulissenstein) der türrahmenseitigen Führungsmechanik. Das Halteteil kann z. B. stangen-, bolzen- und/oder stiftförmig ausgebildet sein und/oder sich im Wesentlichen vertikal vom Verbindungselement nach oben erstrecken.

Es ist möglich, dass das Halteteil eine Durchlassöffnung für ein mit dem Schalter verbundenes Steuerkabel aufweist. Die Durchlassöffnung erstreckt sich vorzugsweise mittig durch das Halteteil.

Das Verbindungselement kann zweckmäßig eine Abdeckung zur Abdeckung und z. B. zur Aufnahme des Schalters und/oder zumindest abschnittsweise der Tragstruktur aufweisen. Die Abdeckung kann z. B. ein Blech- und/oder Kunststoffteil sein. Alternativ oder ergänzend kann die Abdeckung als Abdeckhaube ausgeführt sein.

Es ist möglich, dass die Abdeckung und die Tragstruktur eine vorzugsweise allseitige Einhausung für den Schalter bilden. Die Einhausung zusammen mit der Tragstruktur kann, muss aber nicht allseitig geschlossen und/oder dicht ausgeführt sein. Luftspalte, Löcher, etc und/oder von der Abdeckung freigelegte Verbindungsteilbereiche sind möglich.

Die Abdeckung weist vorzugsweise eine Durchlassöffnung für das Halteteil auf. Alternativ oder ergänzend ragt das Halteteil vorzugsweise im Wesentlichen vertikal nach oben von dem Verbindungselement, insbesondere der Tragstruktur, vor.

Die Abdeckung ist vorzugsweise mittels geeigneten Befestigungsmitteln abnehmbar an der Tragstruktur montiert.

Die Tragstruktur umfasst vorzugsweise zumindest zwei auf unterschiedlicher Höhe angeordnete und/oder im Wesentlichen horizontal ausgerichtete Tragabschnitte, nämlich einen zweckmäßig oberen zur Montage des Halteteils und einen z. B. darunter angeordneten zur Montage des Schalters.

Die Tragstruktur kann einteilig oder mehrteilig, z. B. aus zumindest zwei aneinander montierten Einzelteilen, ausgeführt sein. Eines der Einzelteile kann z. B. im Wesentlichen plattenförmig und im Wesentlichen eben ausgebildet sein, also z. B. ohne eine Biege-, Knick- und/oder Umformlinie. Alternativ oder ergänzend kann eines der Einzelteile z. B. im Wesentlichen plattenförmig ausgeführt sein, mit zumindest einer Biege-, Knick- und/oder Umformlinie, um vorzugsweise eine Profilform zu erzeugen.

Es ist möglich, dass der Schalter an dem Türblatt festgelegt ist, z. B. darin integriert bzw. außerhalb des und/oder benachbart zum Türblatt angeordnet.

Es ist möglich, dass eine Stoppeinrichtung für das Steuerkabel an oder in dem Verbindungselement angeordnet ist.

Die Schwenktürkonstruktion ist als z. B. zweiflüglige (zweiblättrige) oder einflüglige (einblättrige) Innenschwenktürkonstruktion ausgeführt.

Zu erwähnen ist, dass die türblattseitige Führungsmechanik zweckmäßig mit dem Türblatt mitverschwenkbar ist und/oder türblattfest angebracht ist.

Zu erwähnen ist ferner, dass die türrahmenseitige Führungsmechanik zweckmäßig nicht mit dem Türblatt mitverschwenkbar ist.

Zu erwähnen ist außerdem, dass die türblattseitige Führungsmechanik und/oder die türrahmenseitige Führungsmechanik vorzugsweise als Linearführung ausgeführt sind.

Zu erwähnen ist darüber hinaus, dass das Merkmal "Schalter" im Rahmen der Erfindung vorzugsweise allgemein Erfassungsmittel umfasst, die dazu dienen, zu erfassen, ob das Türblatt während eines Schließvorgangs auf ein Hindernis trifft.

Die Erfindung ist nicht auf eine Schwenktürkonstruktion beschränkt, sondern umfasst auch ein Kraftfahrzeug, vorzugsweise einen Omnibus, insbesondere einen Stadtbus, mit einer Schwenktürkonstruktion wie hierin beschrieben.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Schwenktürkonstruktion von außen gemäß einer Ausführungsform der Erfindung,
- Figur 2: zeigt eine perspektivische Detailansicht eines Teils der Schwenktürkonstruktion der Figur 1 von innen,
- Figur 3: zeigt eine perspektivische Detailansicht eines Teils der Schwenktürkonstruktion der Figuren 1 und 2 mit zu Darstellungszwecken weggelassenem Türblatt,
- Figur 4: zeigt eine perspektivische Detailansicht eines Teils der Schwenktürkonstruktion der Figuren 1 bis 3,
- Figur 5: zeigt eine andere perspektivische Detailansicht eines Teils der Schwenktürkonstruktion der Figuren 1 bis 4 von innen,
- Figur 6: zeigt eine perspektivische Ansicht der Schwenktürkonstruktion der Figuren 1 bis 5 von innen,
- Figur 7: zeigt eine perspektivische Ansicht eines Teils einer Schwenktürkonstruktion gemäß einer Ausführungsform der Erfindung von außen in geschlossenem Zustand,
- Figur 8: zeigt eine perspektivische Ansicht der Schwenktürkonstruktion der Figur 7 von außen in geöffnetem Zustand,
- Figur 9: zeigt eine explosionsartige perspektivische Ansicht eines Verbindungselements gemäß einer Ausführungsform der Erfindung, und
- Figuren 10 bis 15: zeigen unterschiedliche perspektivische Ansichten des Verbindungselements der Figuren 7 bis 9 in unterschiedlichen Montagezuständen.

Die in den Figuren gezeigten Ausführungsformen stimmen teilweise überein, so dass ähnliche oder identische Teile mit dem gleichen Bezugszeichen versehen sind und zu deren Erläuterung auch auf die Beschreibung der anderen Ausführungsformen und Figuren verwiesen wird, um Wiederholungen zu vermeiden.

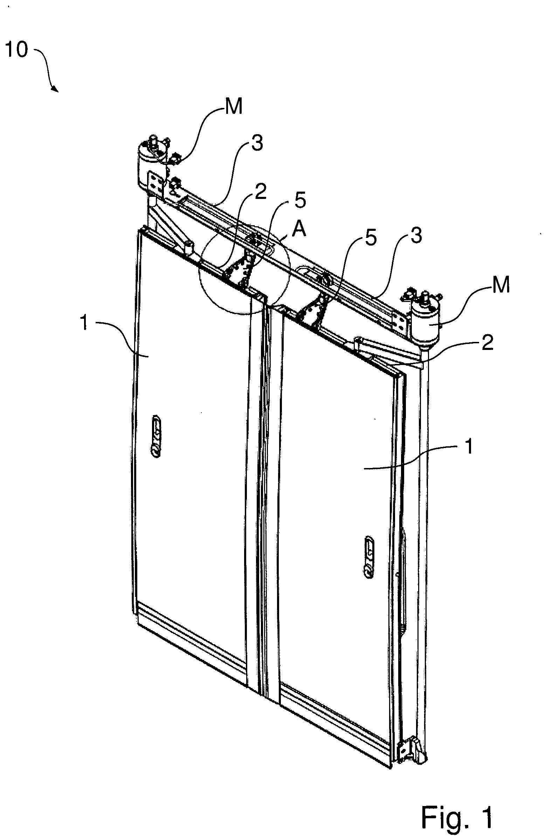

Figur 1 zeigt eine Schwenktürkonstruktion 10 für ein Kraftfahrzeug, vorzugsweise einen Stadtbus, gemäß einer Ausführungsform der Erfindung. Die Schwenktürkonstruktion 10 ist als Innenschwenktürkonstruktion ausgeführt und umfasst zwei zum Öffnen nach innen und zum Schließen nach außen verschwenkbare Türblätter 1.

Die zwei Türblätter 1 sind im Wesentlichen spiegelsymmetrisch angeordnet und baugleich ausgeführt. Die Schwenktürkonstruktion 10 wird deshalb unter Bezugnahme auf nur ein Türblatt 1 beschrieben.

Die Schwenktürkonstruktion 10 umfasst eine türblattseitige (Türblatt-feste) Führungsmechanik 2 und eine türrahmenseitige (Türrahmen-feste) Führungsmechanik 3 für das Türblatt 1. Die türblattseitige Führungsmechanik 2 ist oben an dem Türblatt 1 angebracht, während die türrahmenseitige Führungsmechanik 3 am Türrahmen oder einer anderen nicht öffenbaren Kraftfahrzeug-Struktur (nicht gezeigt) angebracht ist. Das Türblatt 1 kann über einen Türblatt-Antriebs-Motor M, die türrahmenseitige Führungsmechanik 3, ein weiter unten beschriebenes verfahrbares Verbindungselement 5 und die türblattseitige Führungsmechanik 3 verschwenkt und dadurch geöffnet und geschlossen werden.

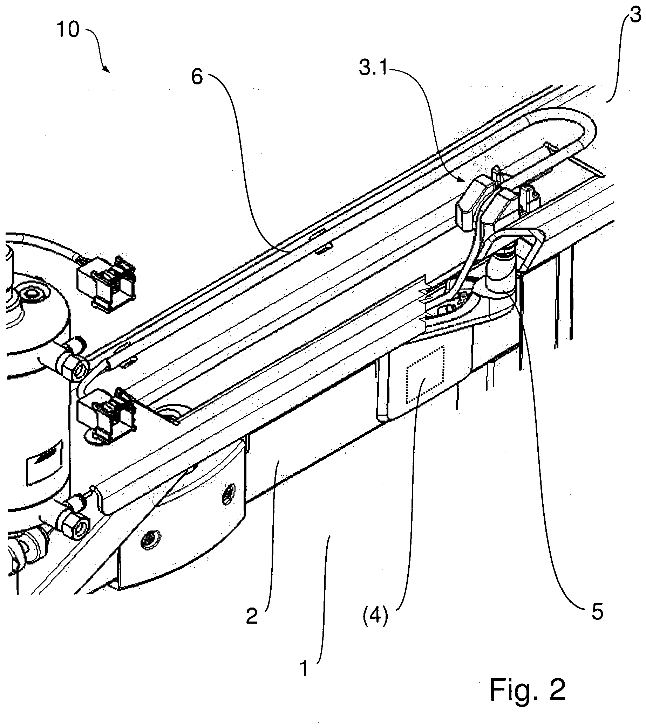

Figur 2 zeigt eine perspektivische Detailansicht des Teils A der Schwenktürkonstruktion 10 der Figur 1 von innen.

Bezugszeichen 4 zeigt auf einen in Figur 2 verdeckten, schematisch dargestellten Schalter 4, zweckmäßig einen Druckwellenschalter, der dazu dient, zu erfassen, ob das Türblatt 1 während eines Schließvorgangs auf ein Hindernis (z. B. einen Fahrgast oder einen unerwünschten oder blockierenden Gegenstand) trifft. Der Schalter 4 kann an sich ein bekannter Druckwellenschalter sein und zur Umwandlung eines pneumatischen Signals in ein elektrisches Signal dienen. Sofern ein Hindernis mittels des Schalters 4 erfasst wird, kann der Schließvorgang des Türblatts 1 gestoppt und/oder reversiert werden, so dass der Schalter 4 einen Teil einer Einklemmschutzsicherung darstellt.

Eine Besonderheit der Schwenktürkonstruktion 10 ist, dass der Schalter 4 an dem Türblatt 1 festgelegt ist und somit in das Türblatt 1 integriert ist, um mit dem Türblatt 1 zu verschwenken. Der Schalter 4 ist hierzu in die türblattseitige Führungsmechanik 2 integriert. Die Führungsmechanik 2 umfasst eine Führungsschiene und ein darin geführtes Führungselement (z. B. eine Rolle oder einen Kulissenstein, nicht gezeigt). Besonders vorteilhaft ist, wenn der Schalter 4 in die Führungsschiene integriert ist. Es sind allerdings ebenso Ausführungsformen möglich, in denen der Schalter 4 außerhalb, z. B. lateral benachbart zu der Führungsschiene, angeordnet ist.

In Figur 2 ist ferner die türrahmenseitige Führungsmechanik 3 zu sehen. Die Führungsmechanik 3 umfasst eine Führungsschiene und einen darin geführten Kulissenstein 3.1, der allerdings auch als Rolle ausgeführt sein könnte.

Die türblattseitige Führungsmechanik 2 und die türrahmenseitige Führungsmechanik 3 sind über das Verbindungselement 5 miteinander verbunden. Das Verbindungselement 5 trägt zweckmäßig oben den Kulissenstein 3.1 und zweckmäßig unten den Schalter 4. Das Verbindungselement 5 trägt ferner zweckmäßig unten das (nicht gezeigte) geführte Führungselement (z. B. Rolle oder Kulissenstein) der türblattseitigen Führungsmechanik 2.

Der Schalter 4 ist mit einem Steuerkabel 6 verbunden, das den Schalter 4 mit einer Türsteuereinheit verbindet, mittels der der Motor M steuerbar ist.

Das Steuerkabel 6 ist an dem geführten Kulissenstein 3.1 festgelegt und erstreckt sich zweckmäßig z. B. durch eine Öffnung, Nut etc. an oder in dem Kulissenstein 3.1. Das Steuerkabel 6 erstreckt sich zudem entlang der Führungsschiene der türrahmenseitigen Führungsmechanik 3, durch die Führungsschiene der türrahmenseitigen Führungsmechanik 3 hindurch und über das Verbindungselement 5 hin zu dem in der türblattseitigen Führungsmechanik 2 angeordneten Schalter 4.

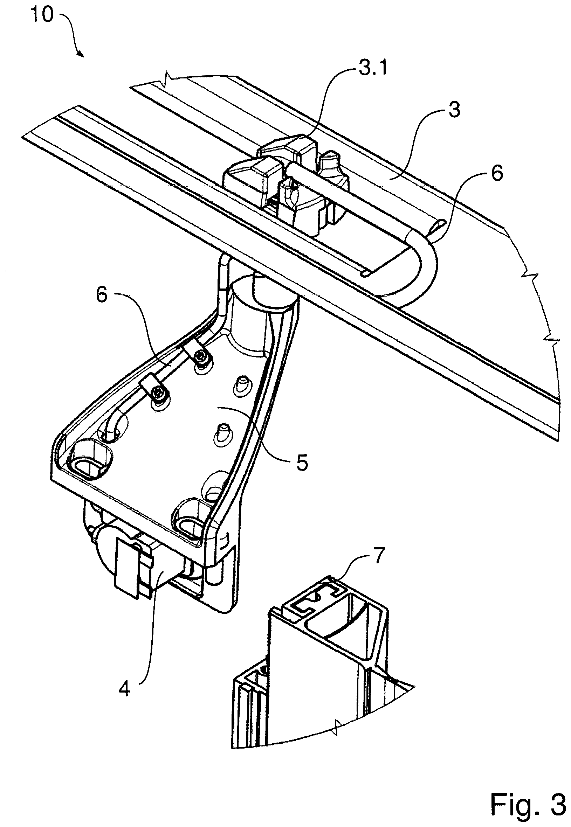

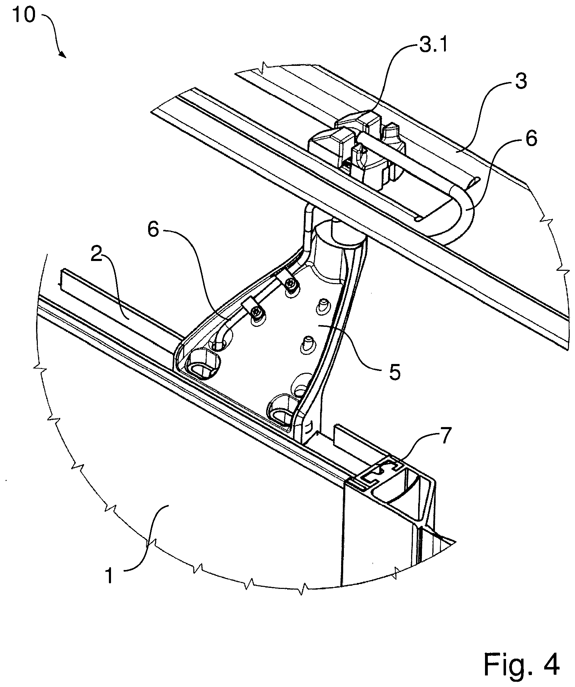

Die Figuren 3 und 4 zeigen Detailansichten eines Teils der Schwenktürkonstruktion 10 der Figuren 1 und 2, einmal mit zu Darstellungszwecken weggelassenem Türblatt 1 (Figur 3) und einmal mit Türblatt (Figur 4).

Den Figuren 3 und 4 kann nochmals entnommen werden, dass die türblattseitige Führungsmechanik 2 und die türrahmenseitige Führungsmechanik 3 über das Verbindungselement 5 miteinander verbunden sind.

Den Figuren 3 und 4 kann ferner entnommen werden, dass das Steuerkabel 6 an dem Verbindungselement 5 befestigt ist, entlang des Verbindungselements 5 verläuft und sich durch eine Durchlassöffnung durch das Verbindungselement 5 hin zu dem Schalter 4 erstreckt.

Das Bezugszeichen 7 kennzeichnet eine Hauptschließkante, insbesondere ein Abschlussprofil, zur Erzeugung einer Druckwelle für den Druckwellenschalter 4. Die Hauptschließkante kann an sich gemäß Stand der Technik ausgeführt sein.

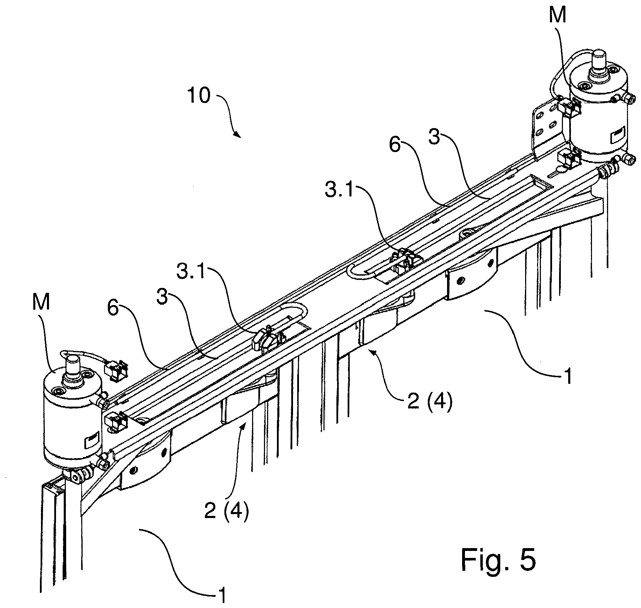

Figur 5 zeigt eine perspektivische Detailansicht der Schwenktürkonstruktion 10 der Figuren 1 bis 4.

Figur 5 kann insbesondere nochmals die torsionsoptimierte Verlegung des Steuerkabels 6 entnommen werden, nämlich von dem türblatt-fest angeordneten Schalter 4 aus, über das Verbindungselement 5 durch die Führungsschiene der türrahmenseitigen Führungsmechanik 3 hindurch zu dem Kulissenstein 3.1 und entlang Führungsschiene der türrahmenseitigen Führungsmechanik 3 hin zu der Türsteuereinheit.

Darüber hinaus kann Figur 5 die Integration des Schalters 4 (in Figur 5 nicht direkt zu sehen) in das Türblatt 1, insbesondere in die türblattseitige Führungsmechanik 2, entnommen werden.

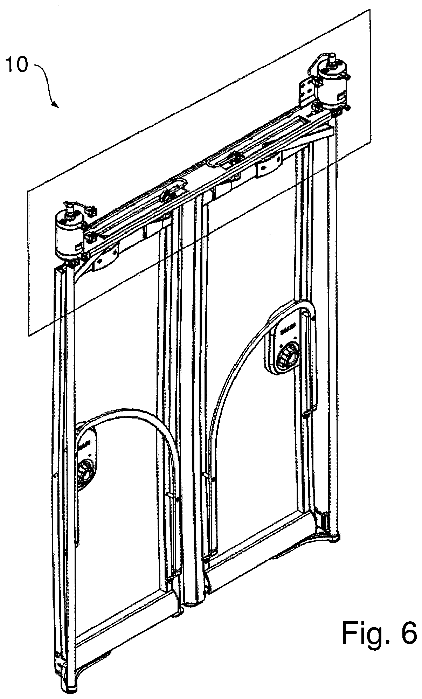

Figur 6 ist eine perspektivische Ansicht der Schwenktürkonstruktion der Figuren 1 bis 5 von innen, zu Darstellungszwecken allerdings ohne Bezugszeichen.

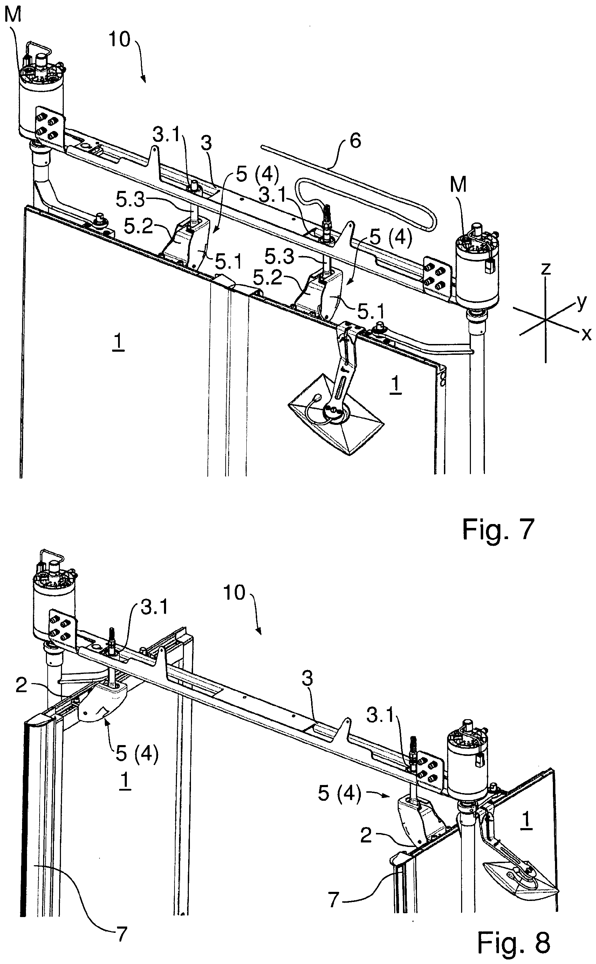

Figur 7 zeigt eine perspektivische Ansicht eines oberen Teils einer Schwenktürkonstruktion 10 gemäß einer Ausführungsform der Erfindung in geschlossenem Zustand, während Figur 7 die Schwenktürkonstruktion 10 der Figur 7 in geöffnetem Zustand zeigt.

Eine Besonderheit der in Figur 7 und 8 gezeigten Ausführungsform ist insbesondere das aus mehreren Einzelteilen 5.1, 5.2 und 5.3 aufgebaute Verbindungselement 5 sowie die Anordnung bzw. Ausrichtung des Schalters 4.

Der Schalter 4 ist, wie weiter unten ersichtlich wird, in das Verbindungselement 5 integriert bzw. daran montiert, weshalb er in den Figuren 7 und 8 nicht zu sehen ist.

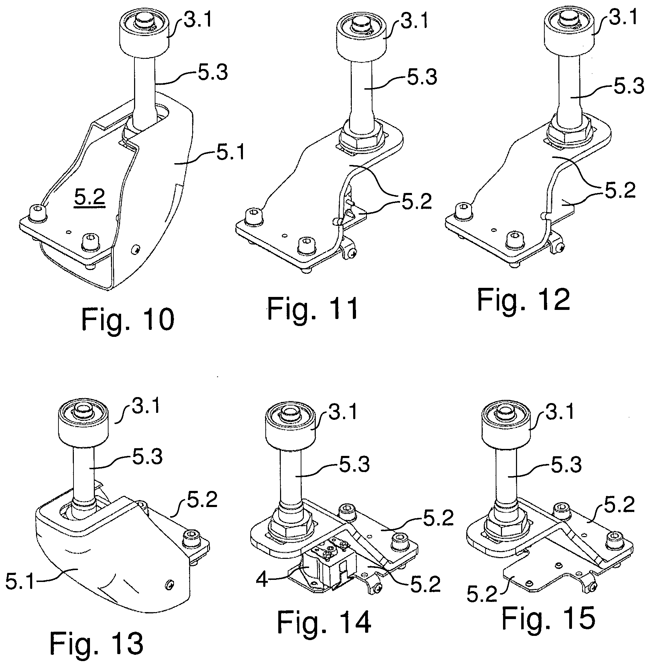

Das Verbindungselement 5 und der Schalter 4 werden nun unter besonderer Bezugnahme auf die explosionsartige perspektivische Ansicht 9 und die Figuren 10 bis 15, die das Verbindungselement 5 mit dem Schalter 4 in verschiedenen Ansichten und unterschiedlichen Montagezuständen zeigen, beschrieben.

Das Verbindungselement 5 ist mehrteilig ausgeführt und aus zumindest drei aneinander befestigten Einzelteilen 5.1, 5.2 und 5.3 aufgebaut.

Das Verbindungselement 5 umfasst eine Tragstruktur 5.2 zum Tragen des Schalters 4 und zum Tragen eines z. B. bolzen-, stangen- und/oder stiftförmigen Halteteils 5.3 zum Halten des geführten Führungselements 3.1 der türrahmenseitigen Führungsmechanik 3 (z. B. Rolle, Kulissenstein etc.).

Das Verbindungselement 5 umfasst ferner eine Abdeckung 5.1, insbesondere eine Abdeckhaube, zur Abdeckung und zweckmäßigen Aufnahme des Schalters 4 und zumindest abschnittsweise der Tragstruktur 5.2.

Das Halteteil 5.3 ragt aus einer Durchlassöffnung in der Abdeckung 5.1 von dem Verbindungselement 5, insbesondere der Tragstruktur 5.2 nach im Wesentlichen vertikal oben vor.

Die Abdeckung 5.1 und die Tragstruktur 5.2 bilden vorzugsweise eine im Wesentlichen allseitige Einhausung für den Schalter 4. Die Einhausung kann, muss aber nicht allseitig geschlossen und/oder dicht ausgeführt sein. Luftspalte, Löcher etc. sind möglich, wie z. B. in Figur 10 gesehen werden kann.

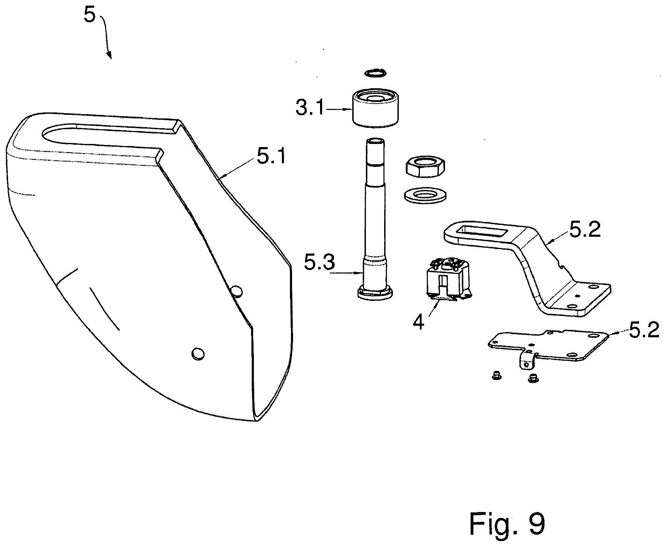

Die Tragstruktur 5.2 umfasst zumindest zwei auf unterschiedlicher Höhe, im Wesentlichen horizontal angeordnete Tragabschnitte, nämlich einen zur Montage des Schalters 4 und einen zur Montage des Halteteils 5.3. Wie z. B. in Figur 9 gesehen werden kann, kann die Tragstruktur 5.2 aus zwei Einzelteilen aufgebaut sein, z. B. einem im Wesentlichen plattenförmigen, ebenen Einzelteil für den Schalter 4 und einem im Wesentlichen plattenförmigen Einzelteil für das Halteteil 5.3 mit zwei Knick-, Biege- und/oder Umformlinien.

Der Schalter 4 ist in dem Verbindungselement 5 aufgenommen. Der Schalter 4 ist außerhalb des Türblatts 1 bzw. benachbart zum Türblatt 1 angeordnet und mit dem Türblatt 1 mitverschwenkbar.

Es ist somit insbesondere möglich, dass der Schalter 4 an dem Türblatt 1 festgelegt ist, z. B. in das Türblatt 1 integriert bzw. außerhalb/benachbart dazu, um zweckmäßig mit dem Türblatt 1 mitverschwenkbar zu sein.

Der Schalter 4 umfasst eine in den Figuren 7 bis 15 nicht gezeigte Membran. Die Membran des Schalters 4 gemäß Ausführungsform der Figuren 7 bis 15 ist im Wesentlichen horizontal angeordnet, also sich erstreckend in der Ebene x, y. Die Membran wird betriebsgemäß im Wesentlichen vertikal, also im Wesentlichen in Richtung z, beansprucht.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen, der durch die nachfolgenden Ansprüche definiert ist.

### Bezugszeichenliste

- 1: Türblatt
- 2: Türblattseitige Führungsmechanik
- 3: Türrahmenseitige Führungsmechanik
- 3.1: Geführtes Führungselement (z. B. Rolle oder Kulissenstein) der türrahmenseitigen Führungsmechanik
- 4: Schalter, insbesondere Druckwellenschalter
- 5: Verfahrbares Verbindungselement
- 5.1: Abdeckung, insbesondere Abdeckhaube, zur Abdeckung und zweckmäßigen Aufnahme des Schalters und/oder zumindest abschnittsweise einer Tragstruktur
- 5.2: Tragstruktur zum Tragen des Schalters und/oder zum Tragen eines Halteteils zum Halten des geführten Führungselements der türrahmenseitigen Führungsmechanik
- 5.3: Halteteil zum Halten des geführten Führungselements der türrahmenseitigen Führungsmechanik
- 6: Steuerkabel
- 7: Hauptschließkante, Druckwellenerzeuger
- 10: Schwenktürkonstruktion, insbesondere Innenschwenktürkonstruktion
- M: Motor zum Verschwenken des Türblatts
- X: Längenrichtung des Kraftfahrzeugs (Breitenrichtung des Türblatts)
- Y: Breitenrichtung des Kraftfahrzeugs (Tiefenrichtung des Türblatts)
- Z: Höhenrichtung des Kraftfahrzeugs (Höhenrichtung des Türblatts)

## Patentansprüche

1. Schwenktürkonstruktion (10), nämlich Innenschwenktürkonstruktion, für ein Kraftfahrzeug, vorzugsweise einen Omnibus, mit zumindest einem verschwenkbaren Türblatt (1), zumindest einer Führungsmechanik (2, 3) für das Türblatt (1) und zumindest einem Schalter (4), vorzugsweise einem Druckwellenschalter, zum Erfassen, ob das Türblatt (1) während eines Schließvorgangs auf ein Hindernis trifft, wobei der Schalter (4) mit dem Türblatt (1) verschwenkbar ist, wobei der Schalter (4) eine Membran aufweist und die Membran im Wesentlichen horizontal ausgerichtet ist und/oder liegend verbaut ist, **dadurch gekennzeichnet, dass**
- der Schalter (4) mit einem Steuerkabel (6) verbunden ist, wobei das Steuerkabel (6) zur Verbindung des Schalters (4) mit einer Türsteuereinheit dient, wobei
- die Führungsmechanik (2, 3) eine türrahmenseitige Führungsmechanik (3) umfasst, wobei die türrahmenseitige Führungsmechanik (3) eine Führungsschiene zum Führen einer Rolle oder eines Kulissensteins (3.1) umfasst, und wobei
- das Steuerkabel (6) durch eine Öffnung in der Führungsschiene verläuft und entlang der Führungsschiene der türrahmenseitigen Führungsmechanik (3) verläuft.

2. Schwenktürkonstruktion (10) nach Anspruch 1, **dadurch gekennzeichnet, dass** der Schalter (4) außerhalb des Türblatts (1) und/oder benachbart zum Türblatt (1) angeordnet ist.

3. Schwenktürkonstruktion (10) nach einem der vorhergehenden Ansprüche, **dadurch gekennzeichnet, dass** die Schwenktürkonstruktion (10) ein verfahrbares Verbindungselement (5) zur Verbindung einer türblattseitigen Führungsmechanik (2) und einer türrahmenseitigen Führungsmechanik (3) für das Türblatt (1) umfasst und das Verbindungselement (5) den Schalter (4) trägt.

4. Schwenktürkonstruktion (10) nach Anspruch 3, **dadurch gekennzeichnet, dass** das Verbindungselement (5) mehrteilig, insbesondere aus mehreren, vorzugsweise zumindest drei Einzelteilen (5.1, 5.2, 5.3), aufgebaut ist und/oder nicht als Eisen- oder Metall-Gussteil ausgeführt ist.

5. Schwenktürkonstruktion (10) nach Anspruch 3 oder 4, **dadurch gekennzeichnet dass** das Verbindungselement (5) eine Tragstruktur (5.2) umfasst zum Tragen des Schalters (4) und/oder eines Halteteils (5.3) zum Halten eines geführten Führungselements (3.1) der türrahmenseitigen Führungsmechanik (3).

6. Schwenktürkonstruktion (10) nach einem der Ansprüche 3 bis 5, **dadurch gekennzeichnet, dass** das Verbindungselement (5) eine Abdeckung (5.1) zur Abdeckung und insbesondere zur Aufnahme des Schalters (4) und/oder zumindest abschnittsweise der Tragstruktur (5.2) aufweist.

7. Schwenktürkonstruktion (10) nach Anspruch 6, **dadurch gekennzeichnet, dass** die Abdeckung (5.1) und die Tragstruktur (5.2) eine vorzugsweise allseitige Einhausung für den Schalter (4) bilden und/oder die Abdeckung (5.1) an der Tragstruktur (5.2) abnehmbar montiert ist.

8. Schwenktürkonstruktion (10) nach einem der Ansprüche 6 bis 7, **dadurch gekennzeichnet, dass** die Abdeckung (5.1) eine Durchlassöffnung für das Halteteil (5.3) aufweist und/oder das Halteteil (5.3) von dem Verbindungselement (5), insbesondere der Tragstruktur (5.2) nach oben absteht.

9. Schwenktürkonstruktion (10) nach einem der Ansprüche 3 bis 8, **dadurch gekennzeichnet, dass** die Tragstruktur (5.2) zumindest zwei auf unterschiedlicher Höhe angeordnet Tragabschnitte aufweist, nämlich einen zur Montage des Schalters (4) und einen zur Montage des Halteteils (5.3).

10. Schwenktürkonstruktion (10) nach einem der Ansprüche 5 bis 9, **dadurch gekennzeichnet, dass** das Halteteil (5.3) eine Durchlassöffnung für ein mit dem Schalter (4) verbundenes Steuerkabel (6) aufweist.

11. Schwenktürkonstruktion (10) nach einem der Ansprüche 3 bis 10, **dadurch gekennzeichnet, dass** an oder in dem Verbindungselement (5) eine Stoppeinrichtung für das Steuerkabel angeordnet ist.

12. Schwenktürkonstruktion (10) nach einem der vorhergehenden Ansprüche, **dadurch gekennzeichnet, dass** der Schalter (4) an dem Türblatt (1) festgelegt ist.

13. Schwenktürkonstruktion (10) nach einem der vorhergehenden Ansprüche, **dadurch gekennzeichnet, dass** eine türblattseitige Führungsmechanik (2) eine vorzugsweise U-förmige Führungsschiene umfasst und der Schalter (4) insbesondere lateral benachbart zu und/oder außerhalb der Führungsschiene angeordnet ist.

14. Kraftfahrzeug, vorzugsweise Omnibus, mit einer Schwenktürkonstruktion (10) nach einem der vorhergehenden Ansprüche.

## Claims

1. A swinging door structure (10), specifically an inward swinging door structure, for a motor vehicle, preferably a bus, having at least one pivotable door leaf (1), having at least one guide mechanism (2, 3) for the door leaf (1), and having at least one switch (4), preferably a pressure wave switch, for detecting whether the door leaf (1) strikes an obstacle during a closing operation, wherein the switch (4) is able to be pivoted with the door leaf (1), wherein the switch (4) has a diaphragm and the diaphragm is oriented substantially horizontally and/or is installed in a lying position, **characterized in that**
- the switch (4) is connected to a control cable (6), wherein the control cable (6) serves for connecting the switch (4) to a door control unit, wherein
- the guide mechanism (2, 3) comprises a door-frame-side guide mechanism (3), wherein the door-frame-side guide mechanism (3) comprises a guide rail for guiding a roller or a slide block (3.1), and wherein
- the control cable (6) runs through an opening in the guide rail and runs along the guide rail of the door-frame-side guide mechanism (3).

2. The swinging door structure (10) according to Claim 1, **characterized in that** the switch (4) is arranged outside the door leaf (1) and/or adjacent to the door leaf (1).

3. The swinging door structure (10) according to either of the preceding claims, **characterized in that** the swinging door structure (10) comprises a movable connection element (5), which serves for connecting a door-leaf-side guide mechanism (2) and a door-frame-side guide mechanism (3) for the door leaf (1), and the connection element (5) carries the switch (4).

4. The swinging door structure (10) according to Claim 3, **characterized in that** the connection element (5) is of multiple-part construction, in particular is constructed from multiple, preferably at least three, individual parts (5.1, 5.2, 5.3), and/or is not designed as an iron or metal casting.

5. The swinging door structure (10) according to Claim 3 or 4, **characterized in that** the connection element (5) comprises a carrying structure (5.2), which serves for carrying the switch (4) and/or a holding part (5.3) for holding a guided guide element (3.1) of the door-frame-side guide mechanism (3).

6. The swinging door structure (10) according to one of Claims 3 to 5, **characterized in that** the connection element (5) has a cover (5.1) for covering and, in particular, for accommodating the switch (4) and/or, at least sectionally, the carrying structure (5.2).

7. The swinging door structure (10) according to Claim 6, **characterized in that** the cover (5.1) and the carrying structure (5.2) form an enclosure, preferably on all sides, for the switch (4), and/or the cover (5.1) is mounted removably on the carrying structure (5.2).

8. The swinging door structure (10) according to either of Claims 6 and 7, **characterized in that** the cover (5.1) has a passage opening for the holding part (5.3), and/or the holding part (5.3) projects upwards from the connection element (5), in particular the carrying structure (5.2).

9. The swinging door structure (10) according to one of Claims 3 to 8, **characterized in that** the carrying structure (5.2) has at least two carrying portions arranged at different heights, specifically one for mounting the switch (4) and one for mounting the holding part (5.3).

10. The swinging door structure (10) according to one of Claims 5 to 9, **characterized in that** the holding part (5.3) has a passage opening for a control cable (6) which is connected to the switch (4).

11. The swinging door structure (10) according to one of Claims 3 to 10, **characterized in that** a stop device for the control cable is arranged on or in the connection element (5).

12. The swinging door structure (10) according to one of the preceding claims, **characterized in that** the switch (4) is secured to the door leaf (1).

13. The swinging door structure (10) according to one of the preceding claims, **characterized in that** a door-leaf-side guide mechanism (2) comprises a preferably U-shaped guide rail, and the switch (4) is arranged in particular laterally adjacent to and/or outside the guide rail.

14. A motor vehicle, preferably a bus, having a swinging door structure (10) according to one of the preceding claims.

## Revendications

1. Construction de porte pivotante (10), à savoir construction de porte pivotante intérieure, pour un véhicule automobile, de préférence un autobus, avec au moins un panneau de porte pivotant (1), au moins un mécanisme de guidage (2, 3) pour le panneau de porte (1) et au moins un interrupteur (4), de préférence un interrupteur à onde de pression, pour détecter si le panneau de porte (1) rencontre un obstacle pendant un processus de fermeture, l'interrupteur (4) étant apte à pivoter avec le panneau de porte (1), l'interrupteur (4) présentant une membrane et la membrane étant orientée sensiblement horizontalement et/ou étant montée à plat, **caractérisée en ce que**
- l'interrupteur (4) est relié à un câble de commande (6), le câble de commande (6) servant à relier l'interrupteur (4) à une unité de commande de porte,
- le mécanisme de guidage (2, 3) comprend un mécanisme de guidage (3) côté encadrement de porte, le mécanisme de guidage (3) côté encadrement de porte comprenant un rail de guidage pour guider un galet ou un coulisseau (3.1), et
- le câble de commande (6) passe par une ouverture dans le rail de guidage et s'étend le long du rail de guidage du mécanisme de guidage (3) côté encadrement de porte.

2. Construction de porte pivotante (10) selon la revendication 1, **caractérisée en ce que** l'interrupteur (4) est agencé à l'extérieur du panneau de porte (1) et/ou à proximité du panneau de porte (1).

3. Construction de porte pivotante (10) selon l'une des revendications précédentes, **caractérisée en ce que** la construction de porte pivotante (10) comprend un élément de liaison (5) déplaçable pour relier un mécanisme de guidage (2) côté panneau de porte et un mécanisme de guidage (3) côté encadrement de porte pour le panneau de porte (1) et l'élément de liaison (5) porte l'interrupteur (4).

4. Construction de porte pivotante (10) selon la revendication 3, **caractérisée en ce que** l'élément de liaison (5) est constitué de plusieurs parties, en particulier de plusieurs, de préférence d'au moins trois, parties individuelles (5.1, 5.2, 5.3), et/ou n'est pas réalisé sous forme de pièce coulée en fer ou en métal.

5. Construction de porte pivotante (10) selon la revendication 3 ou la revendication 4, **caractérisée en ce que** l'élément de liaison (5) comprend une structure porteuse (5.2) pour porter l'interrupteur (4) et/ou une pièce de maintien (5.3) pour maintenir un élément de guidage guidé (3.1) du mécanisme de guidage (3) côté encadrement de porte.

6. Construction de porte pivotante (10) selon l'une des revendications 3 à 5, **caractérisée en ce que** l'élément de liaison (5) présente un couvercle (5.1) destiné à recouvrir, et notamment à recevoir, l'interrupteur (4) et/ou au moins de façon partielle la structure porteuse (5.2) .

7. Construction de porte pivotante (10) selon la revendication 6, **caractérisée en ce que** le couvercle (5.1) et la structure porteuse (5.2) forment un encastrement, de préférence de tous côtés, pour l'interrupteur (4) et/ou le couvercle (5.1) est monté de manière amovible sur la structure porteuse (5.2).

8. Construction de porte pivotante (10) selon l'une des revendications 6 à 7, **caractérisée en ce que** le couvercle (5.1) présente une ouverture de passage pour la pièce de maintien (5.3) et/ou la pièce de maintien (5.3) dépasse vers le haut de l'élément de liaison (5), en particulier de la structure porteuse (5.2).

9. Construction de porte pivotante (10) selon l'une des revendications 3 à 8, **caractérisée en ce que** la structure porteuse (5.2) présente au moins deux sections porteuses agencées à des hauteurs différentes, à savoir une pour le montage de l'interrupteur (4) et une pour le montage de la pièce de retenue (5.3).

10. Construction de porte pivotante (10) selon l'une des revendications 5 à 9, **caractérisée en ce que** la pièce de maintien (5.3) présente une ouverture de passage pour un câble de commande (6) relié à l'interrupteur (4).

11. Construction de porte pivotante (10) selon l'une des revendications 3 à 10, **caractérisée en ce qu'**un dispositif d'arrêt pour le câble de commande est agencé sur ou dans l'élément de liaison (5).

12. Construction de porte pivotante (10) selon l'une des revendications précédentes, **caractérisée en ce que** l'interrupteur (4) est fixé sur le panneau de porte (1).

13. Construction de porte pivotante (10) selon l'une des revendications précédentes, **caractérisée en ce qu'**un mécanisme de guidage (2) côté panneau de porte comprend un rail de guidage de préférence en forme de U et l'interrupteur (4) est agencé en particulier latéralement à proximité et/ou à l'extérieur du rail de guidage.

14. Véhicule automobile, de préférence un autobus, avec une construction de porte pivotante (10) selon l'une des revendications précédentes.
